# EUROPEAN PATENT SPECIFICATION

(11) **EP 4 011 252 B1**
(45) Date of publication and mention of the grant of the patent: **14.10.2026**
(21) Application number: 20945414.9
(22) Date of filing: 19.11.2020
(51) Int. Cl.: A47J 37/06, F24C 15/32

(54) **COOKING DEVICE**
KOCHVORRICHTUNG
DISPOSITIF DE CUISSON

(30) Priority: 17.07.2020 CN 202010701891
(43) Date of publication of application: 15.06.2022
(73) Proprietor: Guangdong Midea White Home Appliance Technology Innovation Center Co., Ltd., Foshan, Guangdong 528311 (CN); Midea Group Co., Ltd., Foshan, Guangdong 528311 (CN)
(72) Inventor: WANG, Wenpeng, Foshan, Guangdong 528311 (CN); GUO, Jin, Foshan, Guangdong 528311 (CN)
(74) Representative: Whitlock, Holly Elizabeth Ann
(86) International application number: PCT/CN2020/130159
(87) International publication number: WO 2022/011912

(56) References cited:
- EP-A1- 0 733 862
- CN-A- 107 019 411
- CN-A- 111 904 293
- CN-U- 210 095 524
- CN-U- 210 611 905
- CN-U- 210 611 905
- CN-U- 210 784 022
- CN-U- 210 871 132
- DE-A1- 102004 033 374
- FR-A1- 2 849 162
- US-A1- 2012 017 773

## Description

### TECHNICAL FIELD

The present disclosure relates to the field of kitchen appliance technology, and more specifically, to a cooking device.

### BACKGROUND

A cooking device such as an oven usually has a function of heated air circulation heating. A three-dimensional baking and multi-layer baking may be realized through heated air circulation heating, which enriches use scenarios of the oven, a heating temperature of food is more even, and the cooking effect is better.

During long term research by the inventor of the present application, the inventor finds that, at present, the heated air circulation heating function is generally realized through a draught fan in coordination with an external heating element. In detail, heating is performed to the air that is drawn to the air supply cavity by the draught fan through a heating element arranged between the draught fan and a back housing to obtain heated air. Then the heated air is sent to the cooking cavity through the draught fan, so as to realize heated air circulation heating function. But much heat of the heating element in this kind of structure will be transferred to the housing by radiation, causing heat loss. EP0733862A1 relates generally to a gaseous fuel burner assembly which, when installed in a gas-fired appliance, gives a more even heating. FR2849162A1 relates generally to an oven in which the distribution of the temperature in the enclosure is more even. DE102004033374A1 relates generally to a cooking appliance heating device with a fan wheel and a radiator which at least partially encloses the fan wheel.

### SUMMARY

Aspects of the invention are set out in the claims. The present disclosure provides a cooking device, so as to solve a technical problem that the heating element of the cooking device is disposed outside of the draught fan which causes heat loss.

In order to solve the foregoing technical problem, the present disclosure provides a cooking device, including: a housing, wherein the housing includes a front housing, a back housing, and a partition plate, the partition plate cooperates with the front housing to form a cooking cavity, the partition plate cooperates with the back housing to form an air supply cavity, and an air supply port and an air return port are defined on the partition plate for communicating the cooking cavity with the air supply cavity; and a heating and air-supplying assembly, disposed in the air supply cavity, wherein the heating and air-supplying assembly is configured to supply heated air to the cooking cavity through the air supply port, and the heated air in the cooking cavity further reflows to the air supply cavity through the air return port; wherein the heating and air-supplying assembly includes an impeller and a heating element, the impeller is configured to drive air in the air supply cavity to flow, and the heating element is disposed in the impeller and configured to heat the air that flows into the impeller to form the heated air.

According to the present invention, the impeller is configured to draw the air along an axial direction of the impeller and eject the air along a radial direction of the impeller, and the heating element is configured to heat the air that flows into the impeller along the axial direction of the impeller.

According to the present invention, the air supply port is defined in a surrounding region of the partition plate, the air return port is defined in a middle region of the partition plate, and the impeller is disposed correspondingly to the air return port.

According to the present invention, the cooking device further includes a supporting rack, wherein the supporting rack includes a supporting shaft and a plurality of supporting pieces, the supporting shaft is disposed in the impeller along the axial direction of the impeller, the supporting pieces are disposed on the supporting shaft at intervals along a circumferential direction of the impeller and extend along the radial direction of the impeller, and the heating element is disposed on the supporting pieces.

According to a specific embodiment of the present disclosure, the heating element is a heating strip, and the heating strip surrounds a periphery of the supporting shaft in a heliciform and passes through and is fixed on the supporting pieces.

According to a specific embodiment of the present disclosure, the supporting pieces defined a plurality of through holes configured for the heating strip passing through, and a hole pitch between every two adjacent through holes defined along the axial direction of the impeller is 2 to 5 times a diameter of the heating strip.

According to a specific embodiment of the present disclosure, the heating strip is made of a resistance material, the diameter of the heating strip is in a range of 0.5mm to 1mm, and the supporting rack is made of an isolation material.

According to a specific embodiment of the present disclosure, the through holes are further divided into at least two rows at intervals along the radial direction of the impeller, and the through holes of every two adjacent rows of the through holes are further staggered with each other along the axial direction of the impeller.

According to a specific embodiment of the present disclosure, a row-to-row distance of the every two adjacent rows of the through holes along the radial direction of the impeller is 5 to 10 times the diameter of the heating strip.

According to a specific embodiment of the present disclosure, the heating element is a heating sheet, and the heating sheet is attached to the supporting pieces.

According to a specific embodiment of the present disclosure, the supporting shaft and the impeller are arranged coaxially.

According to a specific embodiment of the present disclosure, a distance between the supporting pieces and the impeller is greater than or equal to 2mm.

According to a specific embodiment of the present disclosure, the cooking device further includes a fan cover and a fixed rack, the axial direction of the impeller is oriented towards the air return port, the fan cover is disposed on the fixed rack and between the impeller and the partition plate, to guide the heated air in the cooking cavity to flow from the air return port to the impeller, the fixed rack is fixed on the back housing or the partition plate, and the supporting shaft is fixed on the fixed rack.

According to a specific embodiment of the present disclosure, a width of a cross section of the back housing along an axial direction of the impeller is gradually enlarged along a direction of approaching the front housing.

According to a specific embodiment of the present disclosure, the impeller is a centrifugal impeller.

According to the present disclosure, the heating element of the heating and air-supplying assembly of the cooking device is set inside the impeller, so as for the heating element to heat the air flows into the impeller from the cooking cavity. The impeller sends the heated air to the cooking cavity to heat the food. The heating element loses less heat through radiation, which may increase the heat exchange efficiency between the air and the heating element. Thereby a speed of temperature increase is higher, the heating efficiency is improved.

### BRIEF DESCRIPTION OF THE DRAWINGS

In order to explain technical solutions in some embodiments of the present disclosure more clearly, the following will briefly introduce drawings needed in the description of the embodiments.
FIG. 1 is a schematic view of a three-dimensional structure according to an embodiment of the cooking device of the present disclosure.
FIG. 2 is a schematic view of an exploded structure according to an embodiment of the cooking device of the present disclosure.
FIG. 3 is a schematic view of a section view structure according to an embodiment of the cooking device of the present disclosure.
FIG. 4 is a schematic view of a three-dimensional structure of the supporting rack according to an embodiment of the cooking device of the present disclosure.
FIG. 5 is a schematic view of a three-dimensional structure of partial structure according to an embodiment of the cooking device of the present disclosure.

### DETAILED DESCRIPTION

The technical solutions in some embodiments of the present disclosure will be described clearly and completely in conjunction with the accompanying drawings in the embodiments of the present disclosure.

The terms "first" and "second" in the present disclosure are used for description only, not to be understood as indicate or imply relative importance or imply a quantity of technical features. In the description of the present disclosure, "multiple" means at least two, for example two, three and etc. In the description of the present disclosure, unless there is a specific definite limitation. Besides, the terms "include" and "have" and any transformation thereof aim at inclusion with no exclusion. For example, a process, a method, a system, a product or a device that includes a series of steps or units, are not limited to steps or units that are listed, but the steps or units that are not listed are included optionally, or other fixed steps or units for the steps, the method, the product or the equipment are optionally included. The term "and/or" is only relative relationship that only describes the related objects. The term "and/or" indicates there may exist three kinds of relationship. For example, A and/or B, may indicate: A exists alone, A and B exist at the same time, or B exists alone. In addition, the symbol "/" generally indicates "or" relationship between the before object and the after object.

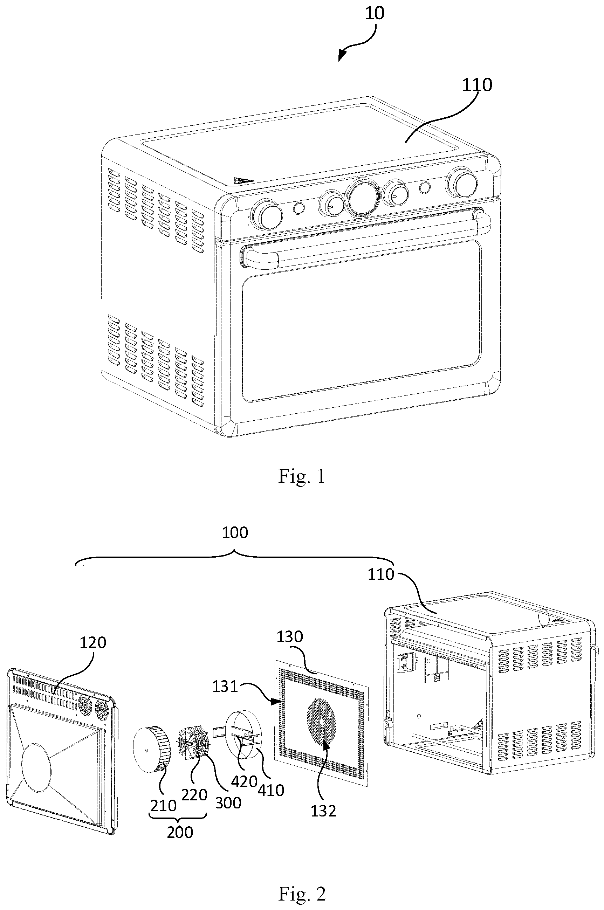

Referring to figure 1 to figure 3, the cooking device of an embodiment of the present disclosure includes a housing 100 and a heating and air-supplying assembly 200. The housing 100 includes a front housing 110, a back housing 120, and a partition plate 130. The partition plate 130 and the front housing 10 corporate to form a cooking cavity 101. The partition plate 130 and the back housing 120 corporate to form an air supply cavity 102. The partition plate 130 is configured with an air supply port 131 and an air return port 132 that fluidly connect the cooking cavity 101 and the air supply cavity 102. The heating and air-supplying assembly 200 is configured in the air supply cavity 102, and supplies heated air to the cooking cavity 101 through the air supply opening 131. The heated air in the cooking cavity 101 further reflows to the air supply cavity 102 through the air return port 132. The heating and air-supplying assembly 200 includes an impeller 210 and a heating element 220. The impeller 210 is configured to drive the air in the air supply cavity 102 to flow, the heating element 220 is disposed inside the impeller 210, and is used to heat the air that flows in the impeller 210 to form heated air.

According to the present invention, the heating element 220 in the heating and air-supplying assembly 200 of the cooking device 10 is disposed inside the impeller 210. In this way, the heating element 220 is able to heat the air inside the impeller 210 from the cooking cavity 101, and the heated air may be delivered to the cooking cavity 101 via the impeller 210 to further heat food. The heat loss through radiation of the heating element 220 is less, which increases heat exchange efficiency between the air and the heating element 220. Therefore, the speed of increase of temperature of the air is higher, and the heating efficiency is improved.

In the present embodiment, the impeller 210 may be a centrifugal impeller. The impeller 210 includes multiple blades (not shown in the figures) that are arranged at intervals in a circumferential direction along an axis of the impeller 210. The space encircled by the blades is the inside of the impeller 210.

According to the present invention, the air supply port 131 is defined in a surrounding region of the partition plate 130. The air return port 132 is defined in a middle region of the partition plate 130. The impeller 210 is arranged correspondingly to the air return port 132. The impeller 210 is configured to draw air from the air return port 132 along an axis direction of the impeller 210. The air is sent or discharged out through the air supply port 131 along a radial direction of the impeller 210. The whole cooking cavity 101 is heated thoroughly by the heated air. The food is heated more even. The heating element 220 is configured to heat the air that flows inside the impeller 210 along the axis direction of the impeller 210. The formed heated air is able to be sent to the cooking cavity 101 directly through the impeller 210. The heat radiated from the heating element 220 to the back housing 120 and the partition plate 130 is few.

In other embodiments, not forming part of the present invention, the air supply port (not shown in the figures) may also be defined in the middle region of the partition plate 130, while the air return port (not shown in the figures) is defined in the surrounding regions of the partition plate 130. The impeller 210 is arranged correspondingly to the air supply port. The impeller 210 is configured to draw air from the air return port along the radial direction of the impeller 210, and to discharge air from the air supply port along the axis direction of the impeller 210. The food in the middle region of the cooking cavity 101 can be heated directly. The heat absorbed by a side wall (not shown in the figures) of the front housing 110 is reduced. Therefore, the heat loss during the air delivery is lessened. Thus food is heated rapidly, and the heating time is shortened.

According to the present invention, the cooking device 10 further includes a supporting rack 300. The supporting rack 300 includes a supporting shaft 310 and multiple supporting pieces 320. The supporting shaft 310 is disposed inside the impeller 210 along the axis direction of the impeller 210. The multiple supporting pieces 320 are disposed on the supporting shaft 310 at intervals along a circumferential direction of the impeller 210. The multiple supporting pieces 320 extend along the radial direction of the impeller 210. The heating element 220 is disposed on the supporting pieces 320.

In this embodiment, the heating element 220 is the heating strip. The heating strip surrounds a periphery of the supporting shaft 310 in a heliciform, passes through and is fixed on the supporting pieces 320. The effective heating region of the heating strip can be increased so as for the air inside the impeller 210 to be heated thoroughly, and the temperature of the heated air delivered by the impeller 210 is higher.

In the present embodiment, the heating strips can be made of resistance material. A diameter of the heating strip is in a range of 0.5mm to 1mm. For example, 0.5mm, 0.8mm, 1mm, or the like. The supporting rack 300 can be insulation material, therefore a short cut phenomena caused by the heating element 220 may be reduced.

In other embodiments, the heating element 220 can also be a heating sheet or the like, and may be attached onto the supporting pieces 320 to heat the air inside the impeller 210.

In other embodiments, the heating element 220 is directly disposed on the supporting shaft 310 or on an inner side of the impeller 210.

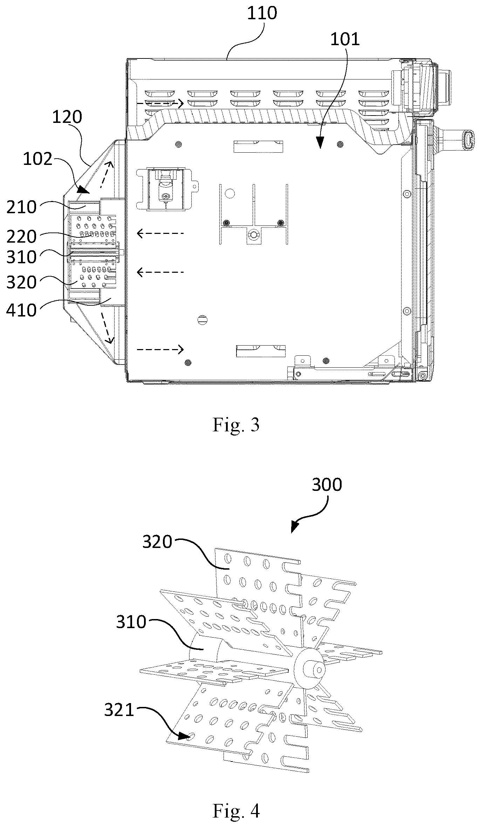

In some embodiments, as shown in Figure 4, multiple through holes 321 for the heating strip to pass through is disposed on the supporting pieces 320. A hole pitch between every two adjacent through holes 321 along the axis direction of the impeller 210 is twice to 5 times the diameter of the heating strip, for example, 2, 3, or 5 times, which avoids contact of the adjacent heating strips to avoid damages.

In this embodiment, the through holes 321 are divided into at least two rows at intervals along the radial direction of the impeller 210. The through holes of every two adjacent rows of the through holes 321 are further staggered with each other along the axis direction of the impeller 210, which is able to avoid the impact on the circulating of the air in the impeller 210, therefore the air can pass through the supporting rack 300 rapidly.

In this embodiment, a row-to-row distance of the every two adjacent rows of through holes 321 along the radial direction of the impeller 210 is 5 to 10 times the diameter of the heating strip, for example, 5, 8 or 10 times, which can further avoid influence to the circulate of air inside the impeller 210, and can enable the air to pass through the supporting rack 300 rapidly.

In this embodiment, the distance between the supporting pieces 320 and the impeller 210 is greater than or equal to 2mm. For example, 2mm, 2.5mm or 3mm. In this way, interference between the supporting pieces 320 and the impeller 210 can be avoided, or the impeller 210 being destroyed because of high temperature of the supporting pieces 320 can be avoided.

In this embodiment, the supporting shaft 310 and the impeller 210 are arranged coaxially, which may make the air inside the impeller 210 to be heated evenly.

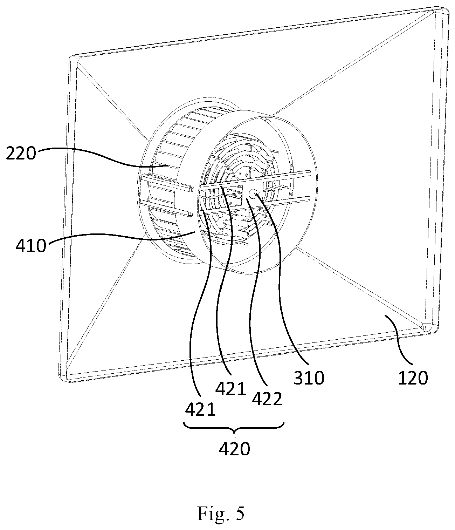

Referring to figure 5, in this embodiment, the cooking device 10 further includes a fan cover 410 and a fixed rack 420. The axis direction of the impeller 210 is oriented towards the air return port 132. The fan cover 410 is disposed on the fixed rack 420, and is disposed between the impeller 210 and the partition plate 130. The fixed rack 420 is fixed on the back housing 120. The supporting shaft 310 is fixed on the fixed rack 420. The heated air in the cooking cavity 101 is guided to flow from the air return port 132 to the impeller 210 by setting the fan cover 410, which enables the air inside the impeller 210 to fully exchange heat with the heating element 220, which realizes quick raise of temperature of the air.

In other embodiments, the fixed rack 420 may be fixed on the partition plate 130, which is not limited herein.

In this embodiment, the fixed rack 420 includes two fixed links 421 and a connecting block 422. The fixed links 421 are in U shapes. Two ends of each of the fixed links 421 are fixed on the back housing 120. The two fixed links 421 pass through the fan cover 410 and are arranged at intervals. A rotation shaft (not shown in figures) of the impeller 210 is disposed in an interval region between the two fixed links 421. The connecting block 422 connects two fixed links 421 in the location of the rotation shaft of the impeller 210. The supporting shaft 310 is fixed on the connecting block 422. The fan cover 410 and the supporting shaft 310 are fixed through the two fixed links 241 arranged at intervals and the connecting blocks 422. A blocking region of the air flown from the air return port 132 to the impeller 210 is decreased, which makes the air flow more smoothly.

In the embodiment, a width of a cross section of the back housing 120 along the axis direction of the impeller 210 is gradually enlarged along a direction approaching the front housing 110. An end face of one end of the back housing 120 away from the front housing 110 could be round. A diameter of the round end face is greater than or equal to the diameter of the impeller 210, so as to match the shape of the impeller 210. An edge of one end of the back housing 120 approaching the front housing 110 is disposed in a rectangle shape. A length and a width of the edges of the rectangle are respectively greater than or equal to a length and a width of the partition plate 130, so as to match the shape of the partition plate 130. Through the arrangement of disposing the back housing 120 to the above-mentioned structure, an air passage of the heated air is compressed, a contact region of the back housing 120 and the heated air is decreased. In this way, the heated air in the air supply cavity 102 enters the cooking cavity 101 quickly, so as to further reduce heat loss, in the same time make the entire structure of the cooking device 10 more compact.

The above are only some embodiments of the present disclosure, and do not limit the scope of the present disclosure, which is defined by the appended claims.

## Claims

1. A cooking device (10), comprising:
a housing (100), wherein the housing (100) comprises a front housing (110), a back housing (120), and a partition plate (130), the partition plate (130) cooperates with the front housing (110) to form a cooking cavity (101), the partition plate (130) cooperates with the back housing (120) to form an air supply cavity (102), and an air supply port (131) and an air return port (132) are defined on the partition plate (130) for communicating the cooking cavity (101) with the air supply cavity (102); and
a heating and air-supplying assembly (200), disposed in the air supply cavity (102), wherein the heating and air-supplying assembly (200) is configured to supply heated air to the cooking cavity (101) through the air supply port (131), and the heated air in the cooking cavity (101) further reflows to the air supply cavity (102) through the air return port (132);
wherein the heating and air-supplying assembly (200) comprises an impeller (210) and a heating element (220), the impeller (210) is configured to drive air in the air supply cavity (102) to flow, and the heating element (220) is disposed in the impeller (210) and configured to heat the air that flows into the impeller (210) to form the heated air;
wherein the impeller (210) is configured to draw the air along an axial direction of the impeller (210) and eject the air along a radial direction of the impeller (210), and the heating element (220) is configured to heat the air that flows into the impeller (210) along the axial direction of the impeller (210);
wherein the air supply port (131) is defined in a surrounding region of the partition plate (130), the air return port (132) is defined in a middle region of the partition plate (130), and the impeller (210) is disposed correspondingly to the air return port (132); the cooking device being **characterised by** further comprising a supporting rack (300), wherein the supporting rack (300) comprises a supporting shaft (310) and a plurality of supporting pieces (320), the supporting shaft (310) is disposed in the impeller (210) along the axial direction of the impeller (210), the supporting pieces (320) are disposed on the supporting shaft (310) at intervals along a circumferential direction of the impeller (210) and extend along the radial direction of the impeller (210), and the heating element (220) is disposed on the supporting pieces (320).

2. The cooking device (10) as claimed in claim 1, wherein the heating element (220) is a heating strip, and the heating strip surrounds a periphery of the supporting shaft (310) in a heliciform and passes through and is fixed on the supporting pieces (320).

3. The cooking device (10) as claimed in claim 2, wherein the supporting pieces (320) defined a plurality of through holes (321) configured for the heating strip passing through, and a hole pitch between every two adjacent through holes (321) defined along the axial direction of the impeller (210) is 2 to 5 times a diameter of the heating strip.

4. The cooking device (10) as claimed in claim 3, wherein the heating strip is made of a resistance material, the diameter of the heating strip is in a range of 0.5mm to 1mm, and the supporting rack (300) is made of an isolation material.

5. The cooking device (10) as claimed in claim 3, wherein the through holes (321) are further divided into at least two rows at intervals along the radial direction of the impeller (210), and the through holes (321) of every two adjacent rows of the through holes (321) are further staggered with each other along the axial direction of the impeller (210).

6. The cooking device (10) as claimed in claim 5, wherein a row-to-row distance of the every two adjacent rows of the through holes (321) along the radial direction of the impeller (210) is 5 to 10 times the diameter of the heating strip.

7. The cooking device (10) as claimed in claim 1, wherein the heating element (220) is a heating sheet, and the heating sheet is attached to the supporting pieces (320).

8. The cooking device (10) as claimed in claim 1, wherein the supporting shaft (310) and the impeller (210) are arranged coaxially.

9. The cooking device (10) as claimed in claim 1, wherein a distance between the supporting pieces (320) and the impeller (210) is greater than or equal to 2mm.

10. The cooking device (10) as claimed in claim 1, further comprising a fan cover (410) and a fixed rack (420), the axial direction of the impeller (210) is oriented towards the air return port (132), the fan cover (410) is disposed on the fixed rack (420) and between the impeller (210) and the partition plate (130), to guide the heated air in the cooking cavity (101) to flow from the air return port (132) to the impeller (210), the fixed rack (420) is fixed on the back housing (120) or the partition plate (130), and the supporting shaft (310) is fixed on the fixed rack (420).

11. The cooking device (10) as claimed in claim 1, wherein a width of a cross section of the back housing (120) along an axial direction of the impeller (210) is gradually enlarged along a direction of approaching the front housing (110).

## Patentansprüche

1. Kochvorrichtung (10), die Folgendes umfasst:
ein Gehäuse (100), wobei das Gehäuse (100) ein vorderes Gehäuse (110), ein hinteres Gehäuse (120) und eine Trennwand (130) umfasst, wobei die Trennwand (130) so mit dem vorderen Gehäuse (110) zusammenwirkt, dass ein Garraum (101) gebildet wird, die Trennwand (130) so mit dem hinteren Gehäuse (120) zusammenwirkt, dass ein Luftzufuhrraum (102) gebildet wird, und an der Trennwand (130) eine Luftzufuhröffnung (131) und eine Luftrückführöffnung (132) zum Verbinden des Garraums (101) mit dem Luftzufuhrraum (102) definiert sind, und
eine Heiz- und Luftzufuhrbaugruppe (200), die in dem Luftzufuhrraum (102) angeordnet ist, wobei die Heiz- und Luftzufuhrbaugruppe (200) so ausgelegt ist, dass sie dem Garraum (101) über die Luftzufuhröffnung (131) erhitzte Luft zuführt, und die erhitzte Luft im Garraum (101) ferner über die Luftrückführöffnung (132) in den Luftzufuhrraum (102) zurückströmt, wobei die Heiz- und Luftzufuhrbaugruppe (200) ein Flügelrad (210) und ein Heizelement (220) umfasst, wobei das Flügelrad (210) so ausgelegt ist, dass es Luft im Luftzufuhrraum (102) zum Strömen bringt, und das Heizelement (220) in dem Flügelrad (210) angeordnet und so ausgelegt ist, dass es die Luft erhitzt, die in das Flügelrad (210) hineinströmt, und so die erhitzte Luft gebildet wird,
wobei das Flügelrad (210) so ausgelegt ist, dass es die Luft eine axiale Richtung des Flügelrads (210) entlangsaugt und in einer axialen Richtung des Flügelrads (210) ausstößt, und das Heizelement (220) so ausgelegt ist, dass es die Luft, die in axialer Richtung des Flügelrads (210) in das Flügelrad (210) hineinströmt, erhitzt,
wobei die Luftzufuhröffnung (131) in einem Randbereich der Trennwand (130) definiert, die Luftrückführöffnung (132) in einem mittleren Bereich der Trennwand (130) definiert und das Flügelrad (210) entsprechend an der Luftrückführöffnung (132) angeordnet ist,
wobei die Kochvorrichtung **dadurch gekennzeichnet ist, dass** sie ferner einen tragenden Rahmen (300) umfasst, wobei der tragende Rahmen (300) eine tragende Welle (310) und mehrere tragende Teile (320) umfasst, die tragende Welle (310) in axialer Richtung des Flügelrads (210) in dem Flügelrad (210) angeordnet ist, die tragenden Teile (320) in Umfangsrichtung des Flügelrads (210) in Abständen an der tragenden Welle (310) angeordnet sind und in radialer Richtung des Flügelrads (210) verlaufen und das Heizelement (220) an den tragenden Teilen (320) angeordnet ist.

2. Kochvorrichtung (10) nach Anspruch 1, wobei es sich bei dem Heizelement (220) um einen Heizdraht handelt und der Heizdraht spiralförmig einen Umfang der tragenden Welle (310) umgibt und durch die tragenden Teile (320) hindurch verläuft und an diesen befestigt ist.

3. Kochvorrichtung (10) nach Anspruch 2, wobei die tragenden Teile (320) mehrere Durchgangslöcher (321) definieren, die so ausgelegt sind, dass der Heizdraht durch sie hindurch verlaufen kann, und ein in axialer Richtung des Flügelrads (210) definierter Lochabstand zwischen jeweils zwei benachbarten Durchgangslöchern (321) das 2- bis 5-fache eines Durchmessers des Heizdrahts beträgt.

4. Kochvorrichtung (10) nach Anspruch 3, wobei der Heizdraht aus einem Widerstandsmaterial hergestellt ist, der Durchmesser des Heizdrahts in einem Bereich von 0,5 mm bis 1 mm liegt und der tragende Rahmen (300) aus einem Isoliermaterial hergestellt ist.

5. Kochvorrichtung (10) nach Anspruch 3, wobei die Durchgangslöcher (321) ferner in Abständen in radialer Richtung des Flügelrads (210) in mindestens zwei Reihen unterteilt sind und die Durchgangslöcher (321) von jeweils zwei benachbarten Reihen Durchgangslöcher (321) ferner in axialer Richtung des Flügelrads (210) zueinander versetzt sind.

6. Kochvorrichtung (10) nach Anspruch 5, wobei ein Reihenabstand bei jeweils zwei benachbarten Reihen Durchgangslöcher (321) in radialer Richtung des Flügelrads (210) das 5- bis 10-fache des Durchmessers des Heizdrahts beträgt.

7. Kochvorrichtung (10) nach Anspruch 1, wobei es sich bei dem Heizelement (220) um eine Heizlamelle handelt und die Heizlamelle an den tragenden Teilen (320) angebracht ist.

8. Kochvorrichtung (10) nach Anspruch 1, wobei die tragende Welle (310) und das Flügelrad (210) koaxial angeordnet sind.

9. Kochvorrichtung (10) nach Anspruch 1, wobei ein Abstand zwischen den tragenden Teilen (320) und dem Flügelrad (210) mindestens 2 mm beträgt.

10. Kochvorrichtung (10) nach Anspruch 1, die ferner eine Gebläseabdeckung (410) und einen festen Rahmen (420) umfasst, wobei die axiale Richtung des Flügelrads (210) zur Luftrückführöffnung (132) weist, die Gebläseabdeckung (410) an dem festen Rahmen (420) und zwischen dem Flügelrad (210) und der Trennwand (130) angeordnet ist und so die erhitzte Luft aus dem Garraum (101) von der Luftrückführöffnung (132) zum Flügelrad (210) leitet, der feste Rahmen (420) an dem hinteren Gehäuse (120) oder der Trennwand (130) und die tragende Welle (310) an dem festen Rahmen (420) befestigt ist.

11. Kochvorrichtung (10) nach Anspruch 1, wobei eine Breite eines Querschnitts des hinteren Gehäuses (120) in axialer Richtung des Flügelrads (210) zum vorderen Gehäuse (110) hin allmählich zunimmt.

## Revendications

1. Dispositif de cuisson (10), comportant :
un boîtier (100), dans lequel le boîtier (100) comporte un boîtier avant (110), un boîtier arrière (120) et une plaque de séparation (130), la plaque de séparation (130) coopère avec le boîtier avant (110) afin de former une cavité de cuisson (101), la plaque de séparation (130) coopère avec le boîtier arrière (120) afin de former une cavité d'alimentation en air (102), et un orifice d'alimentation en air (131) et un orifice de retour d'air (132) sont définis sur la plaque de séparation (130) pour faire communiquer la cavité de cuisson (101) avec la cavité d'alimentation en air (102) ; et
un ensemble de chauffage et d'alimentation en air (200), disposé dans la cavité d'alimentation en air (102), dans lequel l'ensemble de chauffage et d'alimentation en air (200) est configuré pour fournir de l'air chauffé à la cavité de cuisson (101) par le biais de l'orifice d'alimentation en air (131), et l'air chauffé dans la cavité de cuisson (101) s'écoule par ailleurs à nouveau vers la cavité d'alimentation en air (102) par le biais de l'orifice de retour d'air (132) ;
dans lequel l'ensemble de chauffage et d'alimentation en air (200) comporte une roue (210) et un élément chauffant (220), la roue (210) est configurée pour entraîner l'écoulement de l'air dans la cavité d'alimentation en air (102), et l'élément chauffant (220) est disposé dans la roue (210) et configuré pour chauffer l'air qui s'écoule jusque dans la roue (210) pour former l'air chauffé ;
dans lequel la roue (210) est configurée pour aspirer l'air le long d'une direction axiale de la roue (210) et pour éjecter l'air le long d'une direction radiale de la roue (210), et l'élément chauffant (220) est configuré pour chauffer l'air qui s'écoule jusque dans la roue (210) le long de la direction axiale de la roue (210) ;
dans lequel l'orifice d'alimentation en air (131) est défini dans une région environnante de la plaque de séparation (130), l'orifice de retour d'air (132) est défini dans une région médiane de la plaque de séparation (130), et la roue (210) est disposée de manière correspondante au niveau de l'orifice de retour d'air (132) ;
le dispositif de cuisson étant **caractérisé en ce qu'**il comporte par ailleurs une grille de support (300), dans lequel la grille de support (300) comporte un arbre de support (310) et une pluralité de pièces de support (320), l'arbre de support (310) est disposé dans la roue (210) le long de la direction axiale de la roue (210), les pièces de support (320) sont disposées sur l'arbre de support (310) selon des intervalles le long d'une direction circonférentielle de la roue (210) et s'étendent le long de la direction radiale de la roue (210), et l'élément chauffant (220) est disposé sur les pièces de support (320).

2. Dispositif de cuisson (10) selon la revendication 1, dans lequel l'élément chauffant (220) est une bande chauffante, et la bande chauffante entoure une périphérie de l'arbre de support (310) en une forme d'hélice et passe au travers des pièces de support (320) et est fixée sur celles-ci.

3. Dispositif de cuisson (10) selon la revendication 2, dans lequel les pièces de support (320) définissent une pluralité de trous traversants (321) configurés pour le passage de la bande chauffante, et un pas de trous entre chaque paire de trous traversants adjacents (321) qui est défini le long de la direction axiale de la roue (210) est de 2 à 5 fois un diamètre de la bande chauffante.

4. Dispositif de cuisson (10) selon la revendication 3, dans lequel la bande chauffante est réalisée à partir d'un matériau de résistance, le diamètre de la bande chauffante se trouve dans une plage allant de 0,5 mm à 1 mm, et la grille de support (300) est réalisée à partir d'un matériau isolant.

5. Dispositif de cuisson (10) selon la revendication 3, dans lequel les trous traversants (321) sont par ailleurs divisés en au moins deux rangées selon des intervalles le long de la direction radiale de la roue (210), et les trous traversants (321) de chaque paire de rangées adjacentes des trous traversants (321) sont par ailleurs décalés les uns par rapport aux autres le long de la direction axiale de la roue (210).

6. Dispositif de cuisson (10) selon la revendication 5, dans lequel une distance allant de rangée à rangée de chaque paire de rangées adjacentes des trous traversants (321) le long de la direction radiale de la roue (210) est de 5 à 10 fois le diamètre de la bande chauffante.

7. Dispositif de cuisson (10) selon la revendication 1, dans lequel l'élément chauffant (220) est une feuille chauffante, et la feuille chauffante est fixée aux pièces de support (320).

8. Dispositif de cuisson (10) selon la revendication 1, dans lequel l'arbre de support (310) et la roue (210) sont disposés de manière coaxiale.

9. Dispositif de cuisson (10) selon la revendication 1, dans lequel une distance entre les pièces de support (320) et la roue (210) est supérieure ou égale à 2 mm.

10. Dispositif de cuisson (10) selon la revendication 1, comportant par ailleurs un couvercle de ventilateur (410) et une grille fixe (420), la direction axiale de la roue (210) est orientée vers l'orifice de retour d'air (132), le couvercle de ventilateur (410) est disposé sur la grille fixe (420) et entre la roue (210) et la plaque de séparation (130), afin de guider l'air chauffé dans la cavité de cuisson (101) pour qu'il s'écoule depuis l'orifice de retour d'air (132) vers la roue (210), la grille fixe (420) est fixée sur le boîtier arrière (120) ou la plaque de séparation (130), et l'arbre de support (310) est fixé sur la grille fixe (420).

11. Dispositif de cuisson (10) selon la revendication 1, dans lequel une largeur d'une section transversale du boîtier arrière (120) le long d'une direction axiale de la roue (210) va progressivement en s'agrandissant le long d'une direction d'approche du boîtier avant (110).
